# EUROPEAN PATENT APPLICATION

(11) **EP 4 567 695 A1**
(43) Date of publication of application: **11.06.2025**
(21) Application number: 24210459.4
(22) Date of filing: 04.11.2024
(51) Int. Cl.: G06Q 10/08, B65G 1/137, G01S 13/72, G01S 13/88, G06K 19/04, G06Q 10/0833, G06Q 10/087, G06Q 20/20

(54) **A METHOD AND A SYSTEM FOR INVENTORY MANAGEMENT**

(30) Priority: 05.12.2023 IN 202311082752
(71) Applicant: Hand Held Products, Inc., Charlotte, NC 28202 (US)
(72) Inventor: KUMAR, Muthu, Charlotte, 28202 (US); PANDEY, Panjek, Charlotte, 28202 (US)
(74) Representative: Haseltine Lake Kempner LLP

(57) **Abstract**

A method and system for inventory management is disclosed. The inventory management method comprises sensing, via at least one RFID reader, RFID tag information for each of one or more packages based on at least one RFID tag associated with each of the one or more packages. The inventory management method further comprises sensing, via at least one radar sensor, a respective location for each of the one or more packages. The inventory management method further comprises comparing, via an angle alert framework, the respective location for each of the one or more packages with a predetermined manifest information. Thereafter, the inventory management method comprises determining, via one or more processors, a placement of each of the one or more packages based at least on the comparison.

## Description

### TECHNOLOGICAL FIELD

Example embodiments of the present disclosure relate generally to radio frequency identification (RFID) systems and more particularly, the present disclosure relates to a method and a system for inventory management to read one or more packages for alerting misplaced one or more packages.

### BACKGROUND

Inventory management in today's fast-paced world of logistics and package delivery with accurate and efficient tracking of packages and order of package placement in a package car is crucial. Proper tracking and ordering of package placement in the package car helps to improve the daily work productivity of the workers directly. The improved daily work productivity makes the workers' workflow easy and helps in quick delivery of the packages. If any package placement is not in order or is misplaced, then it may lead to major impact in the workers daily workflow. So far, there is no automated solution to detect and alert the misplaced package in the package car. Present automated solutions can only detect a mislead or an incorrect package loaded in the package car. However, the current solutions cannot detect, and alert misplace of the package in the package car. Therefore, a need remains to address the limitations in the present automated solutions to not only detect, but also, track packages and alert users about any misplaced package in the package car.

The inventors have identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

### BRIEF SUMMARY OF THE INVENTION

The following presents a summary of some example embodiments to provide a basic understanding of some aspects of the present disclosure. This summary is not an extensive overview and is intended to neither identify key or critical elements nor delineate the scope of such elements. It will also be appreciated that the scope of the disclosure encompasses many potential embodiments in addition to those here summarized, some of which will be further described in the detailed description that is presented later.

In an example embodiment, an inventory management method is disclosed. The inventory management method comprises steps of sensing, via at least one radio frequency identification (RFID) reader, RFID tag information for each of one or more packages based on at least one RFID tag associated with each of the one or more packages. Further, inventory management method comprises, sensing, via at least one radar sensor, a respective location for each of the one or more packages. Further, inventory management method comprises, comparing, via an angle alert framework (AAF), the respective location for each of the one or more packages with a predetermined manifest information. Further, inventory management method comprises, determining, via one or more processors, a placement of each of the one or more packages based at least on the comparison.

In some embodiments, the inventory management method comprises receiving, by the one or more processors, the predetermined manifest information of the at least one RFID tag associated with each of the one or more packages. In some embodiments, the predetermined manifest information corresponds to predefined location information of the one or more packages. In some embodiments, the placement of the one or more packages within a vehicle corresponds to a correct placement and an incorrect placement of the one or more packages within the vehicle.

In some embodiments, the inventory management method further comprises generating, by the one or more processors, a first signal based at least on the correct placement of the one or more packages. Further, the inventory management method comprises, transmitting the first signal to a first indicator, wherein the indicator generates a visual or audible indication to signal correct placement of the one or more packages.

In some embodiments, the inventory management method further comprises generating, by the one or more processors, a second signal based at least on the incorrect placement of the one or more packages. Further, the inventory management method comprises transmitting the second signal to a second indicator, wherein the indicator generates a visual or audible indication to signal incorrect placement of the one or more packages.

In some embodiments, the respective location of a first package comprises at least angular coordinates for each of the one or more packages.

In some embodiments, the inventory management method further comprises detecting, via the at least one radar sensor, the one or more packages approaching the vehicle.

In some embodiments, the inventory management method further comprises determining, via the at least one RFID reader, the RFID tag information is not associated with the vehicle. Further, the inventory management method comprises generating, by the one or more processors, an alert signal based at least on the determination.

In some embodiments, the at least one RFID reader and the at least one radar sensor are located inside the vehicle.

In another example embodiment, an inventory management system is provided. The inventory management system comprises at least one RFID reader configured to sense RFID tag information for each of one or more packages based on at least one RFID tag associated with each of the one or more packages. Further, the inventory management system comprises at least one radar sensor configured to sense a respective location for each of the one or more packages. The at least one RFID reader is having one or more processors coupled to a memory. The one or more processors are configured to receive, from the at least one RFID reader, the RFID tag information for each of the one or more packages. Further, the one or more processors are configured to receive, from the at least one radar sensor, the respective location for each of the one or more packages and compare, via an angle alert framework (AAF), the respective location for each of the one or more packages with a predetermined manifest information. Further, the one or more processors are configured to determine a placement of each of the one or more packages within a vehicle based at least on the comparison.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the present disclosure in any way. It will be appreciated that the scope of the present disclosure encompasses many potential embodiments in addition to those here summarized, some of which will be further described below.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1 illustrates a block diagram of an inventory management system, in accordance with an example embodiment of the present disclosure;
FIG. 2 illustrates a detailed block diagram of a radio frequency identification (RFID) reader of the inventory management system, in accordance with an example embodiment of the present disclosure;
FIG. 3 illustrates a manifest information of the inventory management system, in accordance with an example embodiment of the present disclosure;
FIG. 4 illustrates one or more packages detected as misload by the inventory management system installed in a vehicle to read one or more packages, in accordance with an example embodiment of the present disclosure; and
FIG. 5 illustrates a flowchart showing steps of an inventory management method, in accordance with an example embodiment of the present disclosure.

### DETAILED DESCRIPTION

Some embodiments will now be described more fully hereinafter with reference to the accompanying drawings, in which some, but not all, embodiments of the present disclosure are shown. Indeed, various embodiments may be embodied in many different forms and should not be construed as limited to the embodiments set forth herein; rather, these embodiments are provided so that this disclosure will satisfy applicable legal requirements.

The components illustrated in the figures represent components that may or may not be present in various embodiments of the present disclosure described herein such that embodiments may include fewer or more components than those shown in the figures while not departing from the scope of the present disclosure. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

The present disclosure provides various embodiments of methods and systems for inventory management. Embodiments may comprise a radar sensor and a radio frequency identification (RFID) reader. The RFID reader may facilitate real-time identification and monitoring of one or more packages associated with an RFID tag within a designated area. The designated area may be a vehicle. Meanwhile, the radar sensor may provide non-contact, wide area object detection, allowing the identification and tracking of the one or more packages in proximity of the vehicle. Various embodiments may allow accurate count of one or more packages and automated inventory updates to improve the daily work productivity directly. Various embodiments of the present disclosure provide increased inventory accuracy, reduced labor costs associated with manual inventory counts, improved package visibility and the ability to monitor inventory in challenging environments or adverse weather conditions.

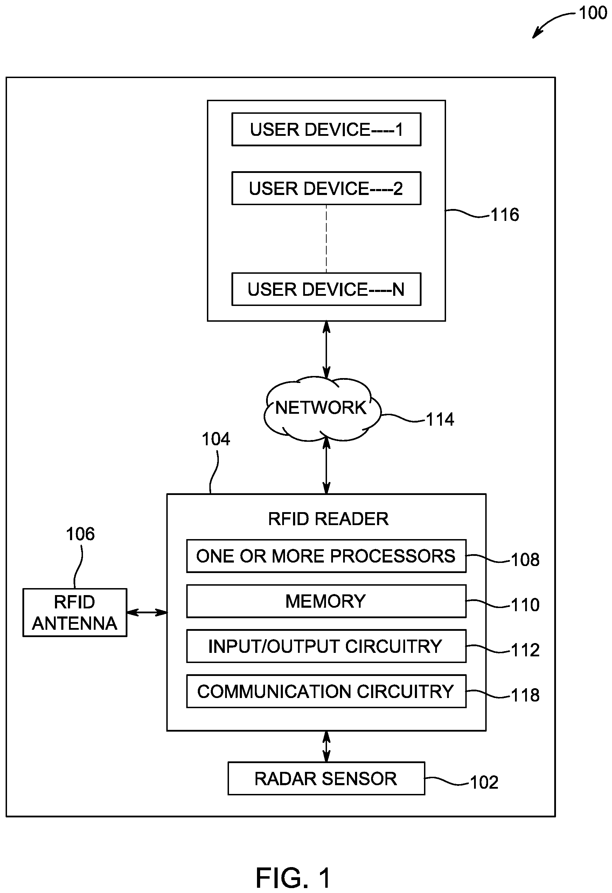

FIG. 1 illustrates a block diagram of an inventory management system 100, in accordance with an example embodiment of the present disclosure. The inventory management system 100 may comprise at least one radar sensor 102, at least one radio frequency identification (RFID) reader 104, at least one RFID antenna 106.

The at least one radar sensor 102 may be coupled to the at least one RFID reader 104. The at least one radar sensor 102 may further comprise a transmitter (not shown) and a receiver (not shown). The transmitter may emit waves. The receiver may analyze the echo of the transmitted waves. The at least one radar sensor 102 may be configured to detect a real time movement of one or more packages (not shown) associated with at least one RFID tag. The real time movement of the one or more packages may be based on the analysed echo of the transmitted waves. Further, the at least one radar sensor 102 may be configured to sense a respective location for each of the one or more packages. In some example embodiments, the at least one radar sensor 102 may include a millimeter wave (mm-wave) based 60GHz radar sensor.

Further, the inventory management system 100 may comprise the at least one RFID reader 104. In some example embodiments, the at least one radar sensor 102 and the at least one RFID reader 104 may be installed on a vehicle (not shown). The at least one RFID reader 104 may be configured to sense RFID tag information for each of the approaching one or more packages inside the vehicle. Further, the at least one RFID reader 104 may be configured to sense RFID tag information based on at least one RFID tag associated with each of the one or more packages. In one example embodiment, the at least one RFID reader 104 may be an IF3A RFID Reader.

Further, the at least one RFID reader 104 may comprise one or more processors 108. The one or more processors 108 may be responsible for performing the operations of the inventory management system 100. The one or more processors 108 may be configured to process incoming requests from the at least one RFID reader 104. Further, the one or more processors 108 may interact with other components of the inventory management system 100 based on the incoming request from the at least one RFID reader 104. Further, the one or more processors 108 may return the result back to the at least one RFID reader 104.

In some embodiments, the one or more processors 108 may be configured to receive, from the at least one RFID reader 104, the RFID tag information for each of the one or more packages. Further, the one or more processors 108 may be configured to receive, from the at least one radar sensor 102, the respective location for each of the one or more packages. Further, the one or more processors 108 may be configured to compare, via an angle alert framework (AAF) (not shown), the respective location for each of the one or more packages with a predetermined manifest information. Further, the at least one RFID reader 104 may be configured to determine, via the one or more processors 108, a placement of each of the one or more packages within the vehicle based at least on the comparison. In one example embodiment, the placement of each of the one or more packages may include at least coordinates of each the one or more package within the vehicle. In another example embodiment, the placement of each of the one or more packages may include placing each the one or more package on either the left side or the right side of the racks within the vehicle.

In some embodiments, the one or more processors 108 may include suitable logic, circuitry, and/or interfaces that are operable to execute one or more instructions stored in the memory to perform predetermined operations. In one embodiment, the processor may be configured to decode and execute any instructions received from one or more other electronic devices or server(s). The processor may be configured to execute one or more computer-readable program instructions, such as program instructions to carry out any of the functions described in this description. Further, the processor may be implemented using one or more processor technologies known in the art. Examples of the processor include, but are not limited to, one or more general purpose processors (e.g., INTEL^{®} or Advanced Micro Devices^{®} (AMD) microprocessors) and/or one or more special purpose processors (e.g., digital signal processors or Xilinx^{®} System On Chip (SOC) Field Programmable Gate Array (FPGA) processor).

Further, the at least one RFID reader 104 may comprise a memory 110. The memory 110 may be communicatively coupled to the one or more processors 108. Further, the memory 110 may be configured to store a set of instructions and data executed by the one or more processors 108. Further, the memory 110 may include the one or more instructions that are executable by the one or more processors 108 to perform specific operations. It is apparent to a person with ordinary skill in the art that the one or more instructions stored in the memory 110 enable the hardware of the system to perform the predetermined operations. Some of the commonly known memory implementations include, but are not limited to, fixed (hard) drives, magnetic tape, floppy diskettes, optical disks, Compact Disc Read-Only Memories (CD-ROMs), and magneto-optical disks, semiconductor memories, such as ROMs, Random Access Memories (RAMs), Programmable Read-Only Memories (PROMs), Erasable PROMs (EPROMs), Electrically Erasable PROMs (EEPROMs), flash memory, magnetic or optical cards, or other type of media/machine-readable medium suitable for storing electronic instructions.

In some embodiments, the at least one RFID reader 104 may be coupled to the at least one RFID antenna 106. In an example embodiment, the at least one RFID antenna 106 may be integrated into the at least one RFID reader 104. It may be noted that the at least one RFID antenna 106 and the at least one RFID reader 104 may be combined into a single physical unit. The integration of the at least one RFID antenna 106 and the at least one RFID reader 104 may create compact and efficient RFID reader device to effectively communicate with at least one RFID tag associated with each of the one or more packages.

In another example embodiment, the at least one RFID antenna 106 may be mounted in wall, ceilings or floor of the vehicle. The at least one RFID antenna 106 may transmit and receive waves. Further, the at least one RFID antenna 106 may enable communication between the at least one RFID reader 104 and the at least one RFID tag associated with each of the one or more packages.

As illustrated in FIG. 1, the at least one RFID reader 104 may comprise an input/output circuitry 112. In some embodiments, a network 114 may be configured to facilitate a communication link for smooth operation of the inventory management system 100. It may be noted that the network 114 may be a wired network and/or a wireless network. The network 114, if wireless, may be implemented using one or more communication techniques. The one or more communication techniques may be Visible Light Communication (VLC), Worldwide Interoperability for Microwave Access (WiMAX), Long Term Evolution (LTE), Wireless Local Area Network (WLAN), Infrared (IR) communication, Public Switched Telephone Network (PSTN), Radio waves, and other communication techniques, known in the art.

Further, the input/output circuitry 112 may enable a user to communicate or interface with the inventory management system 100 via one or more user devices 116. The one or more devices may include user device-1, user device-2, ..., user device-N. In some example embodiments, the user devices 1-N may include a control room computer system or other portable electronic devices. It may be noted that the input/output circuitry 112 may act as a medium transmit input from the one or more user devices 116 to and from the inventory management system 100. In some embodiments, the input/output circuitry 112 may refer to the hardware and software components that facilitate the exchange of information between the user and the inventory management system 100. In one example, the inventory management system 100 may include a graphical user interface (GUI) (not shown) as input circuitry to allow the user to input data via the one or more user devices 116. The input/output circuitry 112 may include various input devices such as keyboards, barcode scanners, GUI for the user to provide data and various output devices such as displays, printers for the user to receive data. In another example, the input/output circuitry 112 may include various output circuitry such as indicators to indicate the correct and incorrect placement of the one or more packages.

Further, the at least one RFID reader 104 may comprise a communication circuitry 118. The communication circuitry 118 may allow the at least one RFID reader 104 to exchange data or information with other systems. In some example embodiments, the data or information may include a manifest information (not shown). The manifest information may refer to historical data that provides details about the one or more packages to be placed inside the vehicle. Further, the communication circuitry 118 may include network interfaces, protocols, and software modules responsible for sending and receiving data or information. In some embodiments, the communication circuitry 118 may include Ethernet ports, Wi-Fi adapters, or communication protocols like HTTP or MQTT for connecting with other systems. The communication circuitry 118 may allow the inventory management system 100 to stay up-to-date and accurately track inventory levels containing one or more packages.

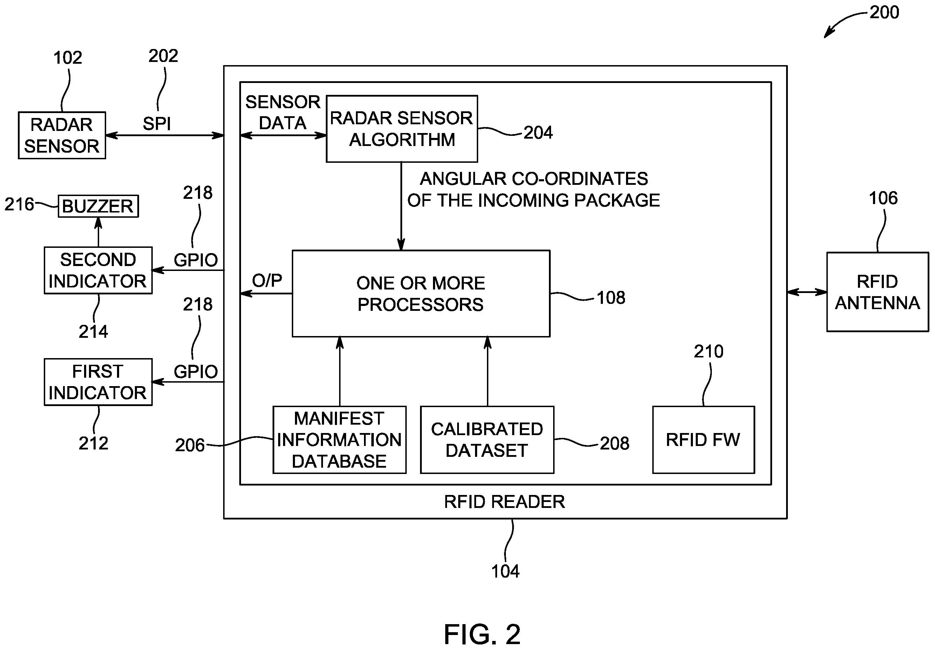

FIG. 2 illustrates a detailed block diagram 200 of the at least one RFID reader 104 of the inventory management system 100, in accordance with an example embodiment of the present disclosure. FIG. 2 is described in conjunction with FIG. 1.

The at least one RFID reader 104 may be configured to sense RFID tag information for each of the one or more packages based on the at least one RFID tag associated with each of the one or more packages. The at least one RFID reader 104 may sense RFID tag information of the approaching one or more packages inside the vehicle. Further, a communication may be enabled between the at least one RFID reader 104 and the at least one RFID tag associated with each of the one or more packages by the at least one RFID antenna 106. The at least one RFID antenna 106 may help the at least one RFID reader 104 to read at least one RFID tag associated with each of the one or more packages.

Further, the at least one radar sensor 102 may be coupled to the at least one RFID reader 104, via a serial peripheral interface (SPI) 202. It may be noted that the SPI 202 is a widely used synchronous serial communication protocol employed for connecting microcontrollers, sensors, memory devices, and other digital peripherals within embedded systems. The SPI 202 may facilitate the exchange of data between the at least one radar sensor 102 and the at least one RFID reader 104 using a common clock signal and multiple data lines. The SPI 202 may offer flexibility and high-speed data transfer, making the SPI 202 suitable for various applications, with different modes of operation such as full-duplex, half-duplex and various configurations such as daisy-chaining multiple devices.

In some embodiments, the at least one radar sensor 102 may be installed in a suitable location within the vehicle to ensure comprehensive coverage of the approaching one or more packages and positioning of the one or more packages on racks inside the vehicle. Further, the at least one radar sensor 102 may be configured to sense a respective location for each of the one or more packages placed on a respective rack within the vehicle. In some example embodiments, the at least one radar sensor 102 may sense the respective location in an approaching order of the one or more packages within the vehicle. In some embodiments, the respective location of a first package approaching the vehicle may comprise angular coordinates with respect to the racks and the vehicle. Further, the at least one radar sensor 102 may transmit sensor data to a radar sensor algorithm 204 via the SPI. The radar sensor algorithm 204 may be configured to sense the respective location of the one or more packages approaching the vehicle.

In some embodiments, the radar sensor algorithm 204 may involve data acquisition and calibration. Further, data acquisition and calibration may involve acquiring RF data sets in real time for each location by positioning one or more packages on both the left and right racks inside the vehicle, without exception. In an example embodiment, while gathering RF data sets, the at least one radar sensor 102 may emit millimeter waves. The emitted millimeter waves may then interact with the one or more packages. Thereafter, the millimeter waves may be reflected back to the at least one radar sensor 102. The at least one radar sensor 102 may then assess factors including, but not limited to the time taken for the millimeter wave return, signal strength of reflection of the millimeter wave, distance, speed, horizontal angle (azimuth), and vertical angle (elevation). It may be noted that all the aforementioned factors may constitute the acquired RF data sets in real time.

In some embodiments, the radar sensor algorithm 204 may include signal processing and object detection. It may be noted that the object detection may further involve detection of the one or more packages. In some embodiments, the signal processing and object detection may be facilitated by various radar sensor algorithms including, but not limited to 3DRIMR, Deep3DRadar, OCTNET, and PointNet. The aforementioned algorithms may aid in recognizing individuals carrying one or more packages within the vehicle. In some embodiments, to pinpoint the location of the one or more packages within the scope of the at least one radar sensor 102, diverse techniques including at least peak detection, clustering, or machine learning-driven methods may be employed.

In some embodiments, the arrangement of the at least one radar sensor 102 and the at least one RFID reader 104 may be calibrated to get the angular information of one or more packages in all the racks inside the vehicle. It may be noted that the calibration of the arrangement of the at least one radar sensor 102 and the at least one RFID reader 104 may be an only one-time activity for each vehicle. In some embodiments, the angular information may include angular coordinates of the one or more packages, incoming angle of one or more packages for every 100ms and acquired RF data sets. In an example embodiment, the angular information may be obtained using an angle alert framework (AAF) (not shown). The AAF may include algorithms for processing and interpreting angular information of the one or more packages. The AAF may be stored inside in the memory 110 and processed by the one or more processors 108.

In some embodiments, the AAF may use a radar angle software development kit (SDK) (not shown). Further, the radar angle SDK may be provided by a manufacturer. In some embodiments, the SDK includes a set of tools and libraries provided by the manufacturer to enable the user to create algorithms that interact with the manufacturer's hardware or technology. In the inventory management system 100, the SDK is specific to the angular information and acquired RF data sets.

In some embodiments, the calibrated data may be stored in a non-volatile memory (not shown) of the memory 110. The non-volatile memory may be used by the AAF to determine and alert the placement of the one or more packages. In some embodiments, the AAF may use a manifest information database 206 to obtain the information of the placement of the one or more packages inside the vehicle. In some embodiments, the calibrated data may be stored in the form of a calibrated dataset 208 in the non-volatile memory. Further, the radar sensor algorithm 204, the manifest information database 206, the calibrated dataset 208 and the AAF may be contained in a RFID firmware (FW) 210 of the at least one RFID reader 104.

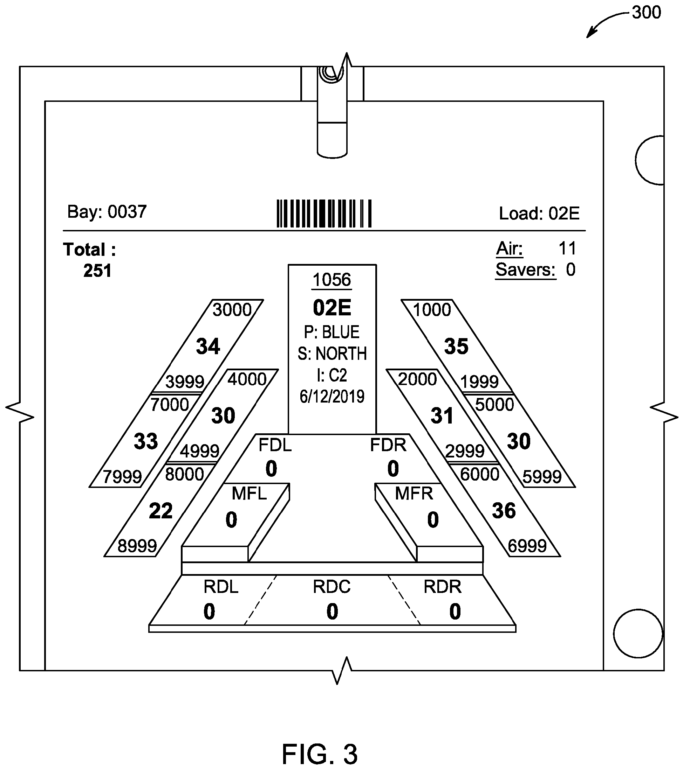

FIG. 3 illustrates a manifest information 300 of the inventory management system 100, in accordance with an example embodiment of the present disclosure. FIG. 3 is described in conjunction with FIGS. 1-2.

The manifest information 300 may be stored within the manifest information database 206, as discussed earlier. In some embodiments, the manifest information 300 may be pasted inside the vehicle prior to the arrival of the one or more packages. It may be noted that the manifest information 300 may be predetermined information related to location information of the one or more packages inside the vehicle. In some embodiments, the manifest information 300 may comprise numbered sections. In numbered sections, each number section may represent a specific location inside the vehicle. In one example, a number section 34 may correspond to the upper left area, designated for one or more packages with identification numbers ranging from 3000 to 3999. In another example, a number section 36 may correspond to the middle right area, designated for one or more packages with identification numbers ranging from 6000 to 6999. Further, an angle lookup table may be created based on the manifest information 300 communicated to the at least one RFID reader 104. The angle lookup table may include the position of each package of the one or more packages inside the vehicle.

In some embodiments, it may be important to organize the one or more packages in the numbered sections according to the priority of fast delivery. In some embodiments, the manifest information 300 may correspond to predefined location information of the one or more packages inside the vehicle. Further, the manifest information 300 may provide a structured layout of the one or more packages within the vehicle.

Further, the manifest information 300 may comprise calibrated values of the at least one radar sensor 102 and one or more pre-assigned location coordinates of the one or more packages. Further, the calibrated values may include time taken for reflected wave, signal strength, distance, speed, horizontal angle, vertical angle. In some example embodiments, the remaining metrics covered in the manifest information 300 may be associated with customer-related factors. In some embodiments, a broader and generic manifest information may be created depending upon an inventory inside the vehicle.

Further, the manifest information 300 may be communicated to the at least one RFID reader 104 installed inside the vehicle. In some embodiments, the one or more processors 108 may be configured to receive the manifest information 300 of the at least one RFID tag associated with each of the one or more packages. Further, the manifest information 300 may help the AAF to know about each of the one or more package's details. The one or more package details may include at least how many packages are there, one or more package placement location such as left/right side of rack, rack number and section.

Further, the at least one radar sensor 102 may be able to sense the angular information about the approaching one or more packages. Then, the at least one sensor 102 may pass the angular information to the AAF. Further, the AAF may obtain the RFID tag information for each of one or more packages based on at least one RFID tag associated with each of the one or more packages. Further, the AAF may obtain the approaching one or more packages details from the RFID tag associated with each of the one or more packages from the RFID read SW module. Further, the AAF may be configured to compare the respective location for each of the one or more packages with the manifest information 300. As a result, with the help of the AAF, the calibrated data and the manifest information 300 may provide ideal placement angle information of the approaching one or more packages.

Thus, the AAF may alert the misplaced packages based at least on the incoming angle of one or more packages from the at least one radar sensor 102 for every 100ms, approaching one or more packages identification from the RFID FW and ideal placement angle information of the approaching one or more packages from the calibrated data & manifest information.

As illustrated in FIG. 2, an identical digital copy of the manifest information 300 may be transmitted to the RFID FW 210, via the network 114. In some embodiments, the identical digital copy may be transmitted from the network 114 just prior to the commencement of loading of the one or more packages. The at least one RFID reader 104 may compare the racks to information of the manifest information 300 and then, may generate an alert signal using the one or more processors 108. The alert signal may include a first signal (not shown) or a second signal (not shown).

In some embodiments, the one or more processors 108 may be configured to determine a placement of each of the one or more packages within the vehicle based at least on the comparison. In one example embodiment, the placement of the one or more packages within the vehicle may correspond to a correct placement of the one or more packages within the vehicle. In another example embodiment, the placement of the one or more packages within the vehicle may correspond to an incorrect placement of the one or more packages within the vehicle.

In some embodiments, if the one or more packages is correctly placed, then the angle of the approaching one or more packages may touch the ideal placement angle of the one or more packages. Further, the one or more processors 108 may be configured to generate the first signal based at least on the correct placement of the one or more packages. The one or more processors 108 may then transmit the first signal to a first indicator 212. The first indicator 212 may generate a visual or audible indication to signal correct placement of the one or more packages. In some example embodiments, the first indicator 212 may include a green light emitting diode (LED).

In some embodiments, if the one or more packages is incorrectly placed, the angle of the approaching one or more packages may fail to enter to the ideal placement angle of the one or more packages. Further, the one or more processors 108 may be configured to generate the second signal based at least on the incorrect placement of the one or more packages. The one or more processors may then transmit the second signal to a second indicator 214. The second indicator 214 may generate a visual or audible indication to signal incorrect placement of the one or more packages. In some embodiments, the second indicator 214 may include a red LED. The second indicator 214 may further be connected to a buzzer 216. The one or more processors 108 may further raise the buzzer 216 for at least five seconds before turning the buzzer 216 off. As a result, the user may give the attention to the verify one or more packages on-time and correctly place the one or more packages to appropriate section or move out the one or more packages out of the vehicle in case of the misplaced one or more packages.

It may be noted that the first indicator 212 and the second indicator 214 may be connected to the at least one RFID reader 104 via a general-purpose input/output (GPIO) 218. It will be apparent to one skilled in the art that GPIO 218 is a versatile interface found in microcontrollers, single-board computers, and embedded systems. The GPIO 218 may provide a means to interact with external devices and sensors by allowing digital signals to be both received as inputs and sent as outputs. Further, GPIO pins may be configured programmatically to function as either input or output ports. Common types of GPIO operations may include reading digital signals such as button presses or sensor data, as inputs and controlling external components such as LEDs, motors, relays, as outputs.

In another example embodiment, the at least one RFID reader 104 may be configured to determine the RFID tag information is not associated with the vehicle. The one or more processors 108 may be configured to generate an alert signal based at least on the determination.

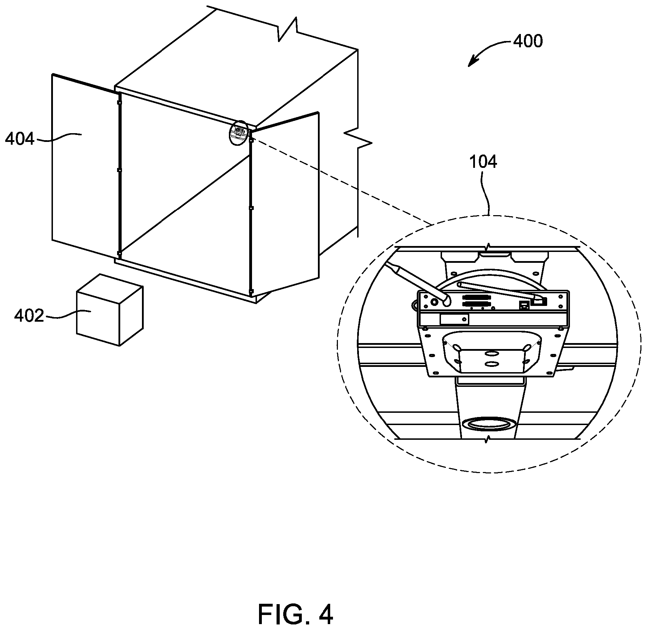

FIG. 4 illustrates a scenario 400 of one or more packages 402 detected as misload by the inventory management system 100, in accordance with an example embodiment of the present disclosure. FIG. 4 is described in conjunction with FIGS. 1-3.

In some embodiments, the at least one radar sensor 102 may alert the at least one RFID reader 104 to validate the RFID tag information for each of one or more packages 402 approaching a vehicle 404. Further, the inventory management system 100 may validate the at least one RFID tag associated with each of the one or more packages 402 against list of the one or more packages in the manifest information 300. The inventory management system 100 may then confirm if the one or more packages 402 is misload. It may be noted that the at least one RFID reader 104 may detect the one or more packages 402, and the at least one radar sensor 102 may indicate that the one or more packages 402 are placed outside the vehicle 404 and hence, may further discard the stray reads of the one or more packages 402.

In some example embodiments, the one or more packages 402 may keep on coming on a rolling conveyor belt (not shown) during misload. Once each package of the one or more packages 402 may be assigned to a bay, an individual may take each package and stage the package near to the vehicle 404. In some embodiments, the package may sometime belong to the vehicle 404 parked in a Bay Dock. In some embodiments, the package may sometime belong to another vehicle (not shown) for the next individual shift. Such packages may be detected by the at least one RFID reader 104 during RFID scan and hence, may constitute to stray reads. Thus, the at least one radar sensor 102 may track the one or more packages 402 coming on the conveyor belt and staged near the vehicle 404, and then, command the at least one RFID reader 104 to scan the at least one RFID tag associated with each of the one or more packages 402. As a result, the at least one RFID reader 104 may read all stray tags. Hence once scanning of the at least one RFID tag may be initiated, the at least one RFID reader 104 may match and neglect all the stray tags detected. Further, as a result, the reading efficiency of the at least one RFID reader 104 may improve.

Further, the at least one radar sensor 102 and the AAF may track the approaching one or more packages 402 inside the vehicle 404. The at least one radar sensor 102 and the AAF may then compare the angle against angle lookup table created during calibration of the at least one radar sensor 102 and the at least one RFID reader 104. As a result, the AAF may detect the racks where each package of the one or more packages 402 is placed. The at least one RFID reader may then compare the racks to the manifest information 300. Thereafter, the at least one RFID reader 104 may declare correct placement of the one or more packages 402 with the first indicator 212, when the one or more packages 402 is placed in assigned rack as per the manifest information. In another embodiment, the at least one RFID reader 104 may declare incorrect placement of the one or more packages with the second indicator 214, when the one or more packages 402 is not placed in assigned rack as per the manifest information 300.

It will be apparent that the above-mentioned components of the inventory management system 100 have been provided only for illustration purposes. In another embodiment, the inventory management system 100 may include other components such as two RFID readers, various position sensors, etc. without departing from the scope of the disclosure.

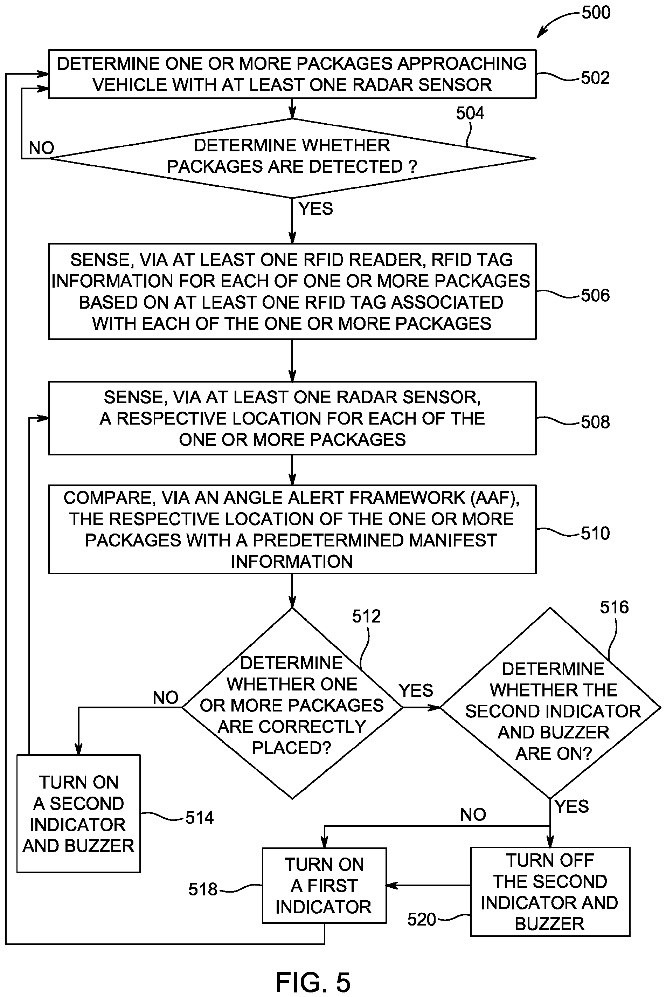

FIG. 5 illustrates a flowchart of an inventory management method 500, in accordance with an example embodiment of the present disclosure. FIG. 5 is described in conjunction with FIGS. 1-4.

At first, the one or more packages approaching the vehicle 404 may be determined with the at least one radar sensor 102, at step 502. For example, when the individual approaching near to the vehicle 404 with a package, the at least one radar sensor 102 may determine whether the approaching package is associated to the vehicle 404. Successively, determine whether the one or more packages are detected at step 504. In one case, if the one or more packages are not detected by the at least one radar sensor 102. In this case, the at least one radar sensor 102 may continue detecting the one or more packages approaching the vehicle, at step 502. For example, if the approaching package may not be associated to the vehicle 404, the one or more processors 108 may generate an alert signal such as the buzzer 216 to indicate that the approaching package may not be associated to the vehicle 404.

In another case, the one or more packages are detected by the at least one radar sensor 102. In some embodiments, the at least one RFID reader 104 may be configured to determine the RFID tag information is not associated with the vehicle 404. Further, the one or more processors 108 may be configured to generate an alert signal based at least on the determination.

Successively, the RFID tag information for each of one or more packages 402 are sensed by the at least one RFID reader 104 based on the at least one RFID tag associated with each of the one or more packages 402, at step 506. In some embodiments, the at least one radar sensor 102 and the at least one RFID reader 104 may be located inside the vehicle 404. For example, the at least one RFID reader 104 located inside the vehicle may sense the RFID information of the approaching package.

Successively, the respective location for each of the one or more packages 402 is sensed by the at least one radar sensor 102, at step 508. In some embodiments, the respective location of the first package may comprise at least angular coordinates for each of the one or more packages 402. For example, the at least one radar sensor 102 may sense the respective location of the approaching package.

Successively, the respective location for each of the one or more packages 402 is compared with the predetermined manifest information 300 using the AAF, at step 510. In some embodiments, the one or more processors 108 may be configured to receive the manifest information 300 of the at least one RFID tag associated with each of the one or more packages 402. Further, the manifest information 300 may correspond to predefined location information of the one or more packages 402. For example, the AAF may compare the respective location of the approaching package with the predetermined manifest information 300 communicated to the at least one RFID reader 104.

Successively, determine whether the one or more packages are correctly placed by the one or more processors 108, at step 512. In some embodiments, the one or more processors 108 may be configured to determine the placement of each of the one or more packages 402 based at least on the comparison. Further, the placement of the one or more packages 402 within the vehicle 505 may correspond to the correct placement and the incorrect placement of the one or more packages 402 within the vehicle 404. In one case, the one or more processors 108 may determine that the one or more packages are not correctly placed. For example, the one or more processors 108 may determine that the approaching package is incorrectly placed based on the comparison of the respective location with the manifest information 300. The one or more processors 108 may be configured to generate the second signal based at least on the incorrect placement of the one or more packages 402. Further, the one or more processors 108 may transmit the second signal to the second indicator 214. The second indicator 214 may generate a visual or audible indication to signal incorrect placement of the one or more packages 402. The second indicator 214 may further be connected to the buzzer 216. The one or more processors 108 may further raise the buzzer 216 for at least five seconds before turning the buzzer 216 off. In this case, the one or more processors 108 may proceed to step 514.

In another case, the one or more processors 108 may determine that the one or more packages are correctly placed. For example, the one or more processors 108 may determine that the approaching package is correctly placed based on the comparison of the respective location with the manifest information 300. The one or more processors 108 may be configured to generate the first signal based at least on the correct placement of the one or more packages 402. Further, the one or more processors 108 may be configured to transmit the first signal to the first indicator 212. The first indicator 212 may generate a visual or audible indication to signal correct placement of the one or more packages. In this case, the one or more processors 108 may proceed to step 516.

Successively, turn on the second indicator 214 and the buzzer 216, at step 514. The second indicator 214 and the buzzer 216 may be turned on to indicate the incorrect placement of the one or more packages 402. Further, returning to step 508 to again sense, via the at least one radar sensor 102, the respective location for each of the one or more packages 402. For example, when the approaching package may be incorrectly placed inside the vehicle 404, the second indicator 214 and the buzzer 216 may be turned on.

Successively, the method determines whether the second indicator 214 and the buzzer 216 are still turned on, at step 516. In one case, the inventory management system 100 may determine that the second indicator 214 and the buzzer 216 are turned off. In this case, the inventory management system 100 may proceed to step 518. In another case, the inventory management system 100 may determine that the second indicator 214 and the buzzer 216 are still turned on. In this case, the inventory management system 100 may proceed to step 520.

Successively, turn on the first indicator 212, at step 518. In some embodiments, the first indicator 212 may be turned on when the second indicator 214 and the buzzer 216 are not turned on to indicate the correct placement of the one or more packages 402. In this case, the inventory management system 100 may return to step 502 to again determine the one or more packages approaching the vehicle 404 with the at least one radar sensor 102. For example, the first indicator 212 may be turned on when the approaching package may be correctly placed inside the vehicle 404.

Successively, turn off the second indicator 214 and the buzzer 216, at step 520. In some embodiments, even though the one or more packages 402 may be correctly placed, the second indicator 214 and the buzzer 216 may still be turned on. Further, the inventory management system 100 may turn off the second indicator 214 and the buzzer 216 and turn on the first indicator 212 to indicate the correct placement of the one or more packages 402. For example, the inventory management system 100 may turn off the second indicator 214 and the buzzer 216 and turn on the first indicator 212 to indicate the correct placement of the approaching package.

It will be appreciated that the method 500 may be implemented by one or more the embodiments disclosed herein, which may be combined or modified as desired or needed. Additionally, the steps in the method 500 may be modified, changed in order, performed differently, performed sequentially, concurrently or simultaneously, or otherwise modified as desired or needed.

It will be apparent to one skilled in the art that the above-mentioned embodiments of the present disclosure may be executed by the one or more processors 108 of the inventory management system 100 and the method 500 using the at least one radar sensor 102, at least one radio frequency identification (RFID) reader 104, at least one RFID antenna 106 and the AAF, without departing from the scope of the disclosure.

In some embodiments, the inventory management system 100 and the method 500 may facilitate real-time identification and monitoring of one or more packages associated with an RFID tag within the vehicle 404. Further, the inventory management system 100 and the method 500 may combine accurate sensing of the RFID tag information, intelligent sensing by the at least one radar sensor 102 and precise determination of the placement of each of the one or more packages using the at least one RFID reader 104.

Many modifications and other embodiments of the disclosure set forth herein will come to mind to one skilled in the art to which the present disclosure pertains having the benefit of the teachings presented in the foregoing descriptions and the associated drawings. Therefore, it is to be understood that the present disclosure is not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An inventory management method comprising:
sensing, via at least one RFID reader, RFID tag information for each of one or more packages based on at least one RFID tag associated with each of the one or more packages;
sensing, via at least one radar sensor, a respective location for each of the one or more packages;
comparing, via an angle alert framework (AAF), the respective location for each of the one or more packages with a predetermined manifest information; and
determining, via one or more processors, a placement of each of the one or more packages based at least on the comparison.

2. The inventory management method of claim 1 further comprising:
receiving, by the one or more processors, the predetermined manifest information of the at least one RFID tag associated with each of the one or more packages.

3. The inventory management method of claim 1, wherein the predetermined manifest information corresponds to predefined location information of the one or more packages.

4. The inventory management method of claim 1, wherein the placement of the one or more packages within a vehicle corresponds to a correct placement and an incorrect placement of the one or more packages within the vehicle.

5. The inventory management method of claim 4 further comprising:
generating, by the one or more processors, a first signal based at least on the correct placement of the one or more packages; and
transmitting the first signal to a first indicator, wherein the first indicator generates a visual or audible indication to signal correct placement of the one or more packages.

6. The inventory management method of claim 4 further comprising:
generating, by the one or more processors, a second signal based at least on the incorrect placement of the one or more packages; and
transmitting the second signal to a second indicator, wherein the second indicator generates a visual or audible indication to signal incorrect placement of the one or more packages.

7. The inventory management method of claim 1, wherein the respective location for each of the one or more packages comprises angular coordinates for each of the one or more packages.

8. The inventory management method of claim 1 further comprising:
detecting, via the at least one radar sensor, the one or more packages approaching a vehicle.

9. The inventory management method of claim 8 further comprising:
determining, via the at least one RFID reader, the RFID tag information not associated with the vehicle; and
generating, by the one or more processors, an alert signal based at least on the determination.

10. The inventory management method of claim 1, wherein the at least one RFID reader and the at least one radar sensor are located inside a vehicle.

11. An inventory management system comprising:
at least one RFID reader configured to sense RFID tag information for each of one or more packages based on at least one RFID tag associated with each of the one or more packages;
at least one radar sensor configured to sense a respective location for each of the one or more packages; and
wherein the at least one RFID reader having one or more processors coupled to a memory, the one or more processors configured to:
receive, from the at least one RFID reader, the RFID tag information for each of the one or more packages;
receive, from the at least one radar sensor, the respective location for each of the one or more packages;
compare, via an angle alert framework (AAF), the respective location for each of the one or more packages with a predetermined manifest information; and
determine a placement of each of the one or more packages within a vehicle based at least on the comparison.

12. The inventory management system of claim 11, wherein the one or more processors are configured to receive the predetermined manifest information of the at least one RFID tag associated with each of the one or more packages.

13. The inventory management system of claim 11, wherein the predetermined manifest information corresponds to predefined location information of the one or more packages.

14. The inventory management system of claim 11, wherein the placement of the one or more packages within the vehicle corresponds to a correct placement and an incorrect placement of the one or more packages within the vehicle.

15. The inventory management system of claim 14, wherein the one or more processors are further configured to generate a first signal based at least on the correct placement of the one or more packages and transmit the first signal to a first indicator, wherein the first indicator generates a visual or audible indication to signal correct placement of the one or more packages.
